# EUROPÄISCHE PATENTSCHRIFT

(11) **EP 1 064 606 B1**
(45) Veröffentlichungstag und Bekanntmachung des Hinweises auf die Patenterteilung: **21.11.2001**
(21) Anmeldenummer: 99915604.5
(22) Anmeldetag: 13.03.1999
(51) Int. Cl.: G06F 17/30

(54) **DATENVERARBEITUNGSSYSTEM UND VERFAHREN ZUM AUTOMATISCHEN ERSTELLEN VON INHALTSANGABEN VON TEXTDOKUMENTEN**
DATA PROCESSING SYSTEM AND METHOD FOR THE AUTOMATIC CREATION OF A SUMMARY OF TEXT DOCUMENTS
SYSTEME ET PROCEDE DE TRAITEMENT DE DONNEES DESTINES A LA CREATION AUTOMATIQUE DE SOMMAIRES DE DOCUMENTS TEXTES

(30) Priorität: 17.03.1998 DE 19811524
(43) Veröffentlichungstag der Anmeldung: 03.01.2001
(73) Patentinhaber: USU Softwarehaus Unternehmensberatung AG, 71696 Möglingen (DE)
(72) Erfinder: HUBER, Harald, D-71686 Remseck (DE); FISCHER, Reinhard, D-73730 Esslingen (DE); MÜLLER, Uwe, D-71336 Waiblingen (DE)
(74) Vertreter: Hössle, Markus, Dipl.-Phys.
(86) Internationale Anmeldenummer: EP9901671
(87) Internationale Veröffentlichungsnummer: WO9948027

(56) Entgegenhaltungen:
- EP-A- 0 583 053
- WO-A-92/16903
- WO-A-93/07577
- US-A- 5 297 039

## Beschreibung

Die vorliegende Erfindung betrifft ein Datenverarbeitungssystem zur Durchführung von Datenrecherchen in einem insbersondere externen elektronischen Datenbestand, sowie ein Verfahren zum automatisierten Erstellen von Inhaltsangaben von Textdokumenten mittels eines derartigen Datenverarbeitungssystems.

Datenrecherchen in elektronischen Medien (beispielsweise Internet) basieren heute im wesentlichen auf einem katalogbasierten Suchen, d.h. einer Unterteilung der zu durchsuchenden Dokumente nach vereinbarten Kategorien oder nach Informationslieferanten, oder auf einer Volltextsuche, in der nach gewünschten Stichworten oder Stichwortkombinationen gesucht wird. Mit der Stichwortsuche lassen sich auch komplexe Sachverhalte recherchieren und mit hoher Wahrscheinlichkeit korrekt finden, wenn die Art der Darstellung, das verwendete Vokabular sowie die üblichen Redewendungen bekannt sind. Schwierig ist es jedoch, die bekannten Suchmethoden wiederverwendbar zu organisieren, da sie insbesondere bei umfangreichen und komplexen Suchanweisungen sehr spezialisiert sind und somit nicht allgemein, beispielsweise von anderen Benutzern des zur Recherche benutzten Datenverarbeitungssystems, verwendbar sind. Dies führt dazu, daß jeder Benutzer seine eigene Suchanweisung für einen spezifischen Fall aufstellt, diese Suchanweisung aber hinterher "verloren" ist, da sie für andere Benutzer entweder trivial oder zu komplex und ggf. nicht nachvollziehbar ist.

Da das Erstellen von Suchanweisungen insbesondere bei katalogbasiertem Suchen gewisse Grundkenntnisse und einige Übung voraussetzt, sind viele eine Recherche wünschenden Personen, die grundsätzlich im Umgang mit Datenverarbeitungssystemen geübt sind, trotzdem auf Inanspruchnahme einer fachkundigen Person angewiesen. Darüber hinaus werden Datenrecherchen dadurch erschwert, daß in der Literatur bestimmte Gegenstände und Sachverhalte oft mit unterschiedlichen Begriffen bezeichnet werden, so daß bei der Erstellung der Suchformulierung mögliche Alternativbegriffe für den Begriff, nach dem recherchiert werden soll, bekannt sein müssen, um Berücksichtigung zu finden. Dies ist insbesondere bei firmenspezifischen Begriffen der Fall, da viele Firmen ihre eigene Terminologie pflegen. Dieser Effekt wird weiter verstärkt, wenn die Recherche auf fremdsprachige Datenbanken erstreckt werden soll. Dies läßt sich an dem folgenden Beispiel veranschaulichen: Eine Person sucht etwas zu dem Thema "Knowledge Management". Um nun eine wirklich umfassende Recherche durchführen zu können, sollte auch der Suchbegriff "Business Intelligence" mit einbezogen werden, da Bereiche des "Knowledge Management" auch oft mit diesem Begriff bezeichnet werden. Jedoch umfaßt der Begriff der "Business Intelligence" auch die Bereiche "Executive Information", "Data Mining" oder "Statistische Korrelationsanalyse", die bei der Recherche jedoch nicht von Interesse sind. Dies führt bereits zu einem Suchstring der folgenden Form: ('Knowledge Management' OR 'Business Intelligence') AND NOT ('Executive Information' OR 'Data Mining' OR 'Statisti* Korrelation*')

Das Erstellen einer Suche kann somit sehr zeitaufwendig werden, oder kann sich unter umständen sogar als langwierige Angelegenheit herausstellen, wenn das Suchergebnis zu umfangreich ist, jedoch notwendige Fachbegriffe zur weiteren Einschränkung der recherchierenden Person nicht bekannt sind und sie erst auf diesbezügliches Fachwissen anderer Personen zurückgreifen muß.

Weitere Versuche, die Recherche eines Anwenders in einer Volltext-Dokumentenbank zu unterstützen sind bekannt. Eine Übersicht befindet sich in "Knowledge Augmented Intranet Search" (http://poster.www6conf.org/poster/727/index.htm).
Die dort dargestellten Ansätze beschreiben im wesentlichen Technologien für die Ergänzung und Erweiterung des Suchstrings. Dies entspricht der .empirisch ermittelten Tatsache, daß die meisten Anwender nur nach einem Stichwort in einer Volltext-Recherche suchen. Aus "Searching Intranet Using Knowledge Representation - Experiences with the Search Enhancer" (verfügbar unter http://w3.Informatik.gu. se/sdixi/publ/snet.htm) ist ein System bekannt, bei dem die einzelnen Suchstrings bzw. Suchbegriffe in einem Generalisierungs- und Spezialisierungsnetzwerk abgelegt werden.

Aus der US-PS 5 297 039 ist ein System bekannt, mit dem Texte durchsucht und auf der Grundlage ermittelter Stichwortübereinstimmungen Auszüge aus den Texten in Form eines Analysenetzes erzeugt werden. Die Analysenetze sind tabellenförmige Anordnungen, die Begriffe und deren Beziehungen enthalten. Die durchsuchten Texte und dazu erstellten Stichwortlisten werden in einer entsprechenden Datenbank abgespeichert. Sucheingaben erfolgen in der Form von Analysenetzen, aus denen Sätze von Stichworten und deren Beziehungen extrahiert sind.

Aus der WO 92/1-6903 A1 ist ein Datenbankverwaltungssystem bekannt, bei dem zur Suche in einer relationalen Datenbank die die Suchanweisung darstellenden Elemente in graphischer Form angezeigt werden.

Aus der US-PS 5 721 900 ist ein Datenverarbeitungssystem mit mindestens einer Benutzereinheit, einer Speichereinheit, einer Verbindung zu mindestens einem insbesondere externen elektronischen Datenbestand und mit einer Suchmaschine zur Durchführung von Datenrecherchen in dem mindestens einen Datenbestand bekannt, das der graphischen Darstellung von Suchen (Queries) dient. Das bekannte Datenverarbeitungssystem unterstützt einen Benutzer mit geringer Erfahrung bei der Formulierung von Suchanweisungen in SQL (Structured Query Language) zur Suche in relationalen Datenbanken durch eine temporäre graphische Aufbereitung einer SQL-Suchformulierung durch Zusammensetzen von Objekten über Prädikate (Boole'sche Operatoren). Dies bedeutet, daß der Benutzer bei der Gestaltung einer Suchanfrage auf der Grundlage von Musterformulierungen und den definierten Prädikaten eine graphisch aufbereitete Auswahl an Suchbegriffen präsentiert bekommt und die von ihm formulierte Suche graphisch (übersichtlich) angezeigt wird.

Für einen Rechercheur stellt sich des weiteren das Problem, daß er sein sogenanntes Suchinteresse nur relativ allgemein angeben kann, um beispielsweise auch Textdokumente mit relevantem Inhalt ermitteln zu können, die abweichende Fachtermini beinhalten. Bei der Durchführung einer relativ allgemein formulierten Suche werden jedoch auch Dokumente ermittelt, deren Inhalt nicht das eigentliche Suchinteresse trifft. Daher besteht für den Rechercheur die Notwendigkeit, die von der Suchmaschine angegebenen gefundenen Textdokumente (Ergebnisdokumente) zumindest kurz aufzurufen und auf ihre Thematik zu untersuchen. Aus diesem Grund bestehen schon lange Bestrebungen, ein automatisches Erstellen von Inhaltsbeschreibungen oder zumindest Inhaltskurzangaben bereitzustellen, so daß im Anschluß an eine durchgeführte Suche in einem Datenbestand die Notwendigkeit für ein Durchlesen bzw. Sichten gefundener Textdokumente entfällt. Die dahingehend bekannten Ansätze basieren auf einer Erkennung heuristischer oder linguistischer Muster, die in einem gegebenen Text aufgrund der typischen Verwendung der Sprache identifiziert werden können.

Ausgehend von diesem Stand der Technik liegt der Erfindung die Aufgabe zugrunde, ein Datenverarbeitungssystem der eingangs genannten Art bereitzustellen, das die Möglichkeit einer einfachen Erstellung auch komplexer Suchanweisungen sowie deren Wiederverwendbarkeit gestattet: Des weiteren liegt der Erfindung die Aufgabe zugrunde, ein Verfahren zum automatisierten Erstellen von Inhaltsangaben (Abstracts) von Textdokumenten weiter zu verbessern.

Zur Lösung dieser Aufgabe werden ein Datenverarbeitungssystem mit den Merkmalen des Anspruchs 1, sowie ein Verfahren mit den Merkmalen des Anspruchs 9 vorgeschlagen. Demnach sind erfindungsgemäß eine Vielzahl von Suchformulierungen für die Suchmaschine als Knoten und Kanten eines semantischen Netzes bildende Suchbausteine abgespeichert, welche Suchbausteine zur Durchführung einer Datenrecherche zu einer beliebig gestaltbaren komplexen Suchanweisung zusammensetzbar sind, wodurch das Netzwerk zum Hinterlegen von Recherchestrategien nutzbar ist. Dabei sind die Knoten über einen Knotennamen, der ihnen eine semantische Aussage verleiht, und einen entsprechenden Suchstring definiert. Die Kanten tragen ebenfalls eine Bezeichnung (jeweils eine pro Richtung) und eine Verknüpfungsanweisung (im einfachsten Falle logisches UND oder logisches ODER). Somit wird jeder Benutzer in die Lage versetzt, durch Zusammensetzen von Suchbausteinen, die eine semantische Struktur bilden, eine individuelle Suchanweisung zur Durchführung einer Datenrecherche zu erstellen, ohne daß er weitergehende Kenntnisse über das der Recherche zugrundeliegende Vokabular bzw. der zugrundeliegenden Mechanismen benötigt. Ebenso ermöglicht das erfindungsgemäße System einem Anwender mit hohem Recherche Know-How dieses Wissen anderen Anwendern weiterzugeben und somit individuelle Recherchestrategien im Netzwerk zu sammeln. Erfindungsgemäß werden somit unterschiedliche, auf Einzelsuchen gerichtete Suchformulierungen als Knoten und/oder Kanten einer semantischen Aussage aufgefaßt und als parametrisierte Bausteine verwendet. Dadurch eröffnet sich die Möglichkeit, verteiltes Wissen gemeinsam zu nutzen, d.h. eine recherchierende Person kann auf Fachbegriffkenntnisse zurückgreifen, die sie nicht selbst hat. Einmal erstellte Suchformulierungen (Queries) müssen somit nicht jedesmal "neu erfunden" werden, sondern werden einmal erstellt und dann erfindungsgemäß als Suchbausteine abgespeichert, die Knoten und Kanten eines semantischen Netzes bilden. Dadurch wird auch ermöglicht, eine Fachterminologie, die außerhalb der eigenen Firma verwendet wird, auf die eigene Terminologie abzubilden, so daß die Mitarbeiter einer Firma bei der Benutzung des erfindungsgemäßen Datenverarbeitungssystems umfassende Recherchen auf der Grundlage der ihnen bekannten, in der eigenen Firma benutzten Fachbegriffe durchführen können.

Erfindungsgemäß enthalten die Knoten des semantischen Netzes bildenden Suchbausteine Suchanfragen und die Kanten des semantischen Netzes bildenden Suchbausteine Verknüpfungsanweisungen, wobei insbesondere die Knoten und Kanten durch bedeutungsgebende Namen identifiziert sind. Durch das Speichern der Suchanfragen (Suchbedingungen) im Knoten und der Verknüpfungsanweisungen (Verbindungsregeln) in den Kanten des semantischen Netzes wird die Erstellung von Suchanweisungen besonders einfach gestaltet, da über eine einfache UND- oder ODER-Verknüpfung hinaus auch kompliziertere Verknüpfungen zuordenbar sind, beispielsweise bei Zugriff auf verschiedene Datenquellen innerhalb einer Recherche. Diesbezüglich notwendige zusätzliche Parameter für die Netzwerkumgebung werden somit durch die als Kante des semantischen Netzes abgespeicherte Verknüpfungsanweisung gegeben.

Eine Darstellung der Vielzahl von Suchformulierungen kann in verschiedener Form erfolgen. Vorzugsweise erfolgt diese Darstellung in hierarchischer (Baum-)Struktur (Hierarchiebäume)und alternativ oder wahlweise in tabellarischer Form auf einer Anzeigeeinheit der Benutzereinheit. Dies erleichtert dem Benutzer die Auswahl der einzelnen Suchbausteine bei der Erstellung einer Suchanweisung, wobei die Auswahl und Zusammenstellung vorteilhafterweise durch einfaches Markieren der gewünschten Suchbausteine in der Bildschirmdarstellung erfolgt.

In weiterer vorteilhafter Ausgestaltung der Erfindung ist eine von einem Benutzer aus Suchbausteinen zusammengesetzte Suchanweisung abspeicherbar, wodurch die Möglichkeit geboten ist, eine einmal zusammengestellte Suchanweisung mehrmals anzuwenden. Insbesondere eröffnet dies die Möglichkeit, wie in Anspruch 5 beschrieben, eine abgespeicherte Suchanweisung in durch den Benutzer vorgebbaren Zeitintervallen automatisch durchzuführen. Dadurch wird erfindungsgemäß erreicht, daß ausgehend von der Benutzerinteraktion bei der Auswahl und Ausführung der Suchformulierungen durch die Recherchetätigkeit eines Anwenders eine Weiterentwicklung der Suchformulierung und der Struktur des Netzwerks erfolgt. Dies erfolgt beispielsweise durch Anzeige der kombinierten Suchformulierungen, wobei Änderungen durch einen Anwender abgespeichert und durch andere Anwender zur Verfügung gestellt werden.

Das Zusammenfügen der von dem Benutzer ausgewählten Suchbausteine erfolgt auf der Grundlage der durch die einzelnen Suchbausteine gebildeten semantischen Struktur, indem eine Anweisung für das Zusammenfügen aus der jeweils obersten beschriebenen Kante der Struktur ermittelt wird.

In vorteilhafter Ausgestaltung der Erfindung sind Benutzerinteraktionsprozesse zu einer Weiterentwicklung des semantischen Netzwerks durch die Recherchetätigkeit eines Anwenders vorgesehen. Derartige Benutzerinteraktionsprozesse sind dazu vorgesehen, eingegebene Suchformulierungen mit dem bestehenden semantischen Netzwerk abzugleichen und in das Netzwerk an geeigneter Stelle zur Ergänzung des semantischen Netzwerks einzufügen. Dadurch wird erfindungsgemäß eine ständige Erweiterung und Verbesserung des semantischen Netzwerks erzielt, was eine Benutzung des Datenverarbeitungssystems für andere Anwender erleichtert.

Vorteilhafterweise erfolgt der Benutzerinteraktionsprozess gemäß Anspruch 7 durch einen Vergleich einer eingegebenen Suchformulierung mit dem abgespeicherten Knoten des semantischen Netzes und eine Abspeicherung der eingegebenen Suchformulierung in dem semantischen Netz unter Berücksichtigung der semantischen Bedeutung, sofern es sich bei der eingegebenen Suchformulierung um eine neue Suchformulierung handelt.

Im Unterschied insbesondere zum Stand der Technik, wie er aus der US-PS 5 721 900 bekannt ist, erfolgt somit erfindungsgemäß eine Unterstützung bei der Erstellung von Suchanfragen auf der Grundlage eines semantischen Netzwerkes, das aus Knoten und Kanten besteht, die einen über gewöhnliche Prädikate/Operatoren hinausgehenden Sinn- oder Bedeutungsinhalt aufweisen. Die Knoten stellen dabei Konzepte bzw. Begriffe aus der Realität dar und die Kanten stellen Beziehungen (Assoziationen) zwischen diesen Begriffen dar, wobei sie eine semantische Aussage aufweisen. Die Knoten und Kanten, d.h. die Bestandteile des abgespeicherten semantischen Netzwerks, können für die Suchanfrage durch den Benutzer kombiniert werden. Als besonders vorteilhaft erweist sich, daß durch die Verwendung eines semantischen Netzwerks auch eine Hierarchisierung erzielt werden kann und daß die Verknüpfung von Begriffen (Knoten) über Kanten über die Verwendung von Prädikaten wie UND oder ODER hinausgeht, was bei einer üblichen SQL-Formulierung nicht möglich ist.

Im Unterschied zu dem in "Searching Intranet Using Knowledge Representation" beschriebenen Verfahren werden erfindungsgemäß nicht nur Suchbegriffe in strukturierter Form abgelegt und nur eine Generalisierung und Spezialisierung angeboten, sondern mit Hilfe der Wissensrepräsentation wie beispielsweise einem semantischen Netzwerk werden Sachverhalte der Realität dargestellt (beispielsweise, daß ein VW Golf ein Pkw ist). Diese Aussagen werden dann mit Suchstrings verbunden, was die Möglichkeit eröffnet, auch das Problem abzubilden, daß Golf eben auch ein Sport sein kann. Eine bedeutsame Weiterentwicklung besteht auch darin, daß im Unterschied zu dem bekannten System nicht nur Fragen nach einzelnen zu spezialisierenden und generalisierenden Begriffen möglich sind, sondern durch Kombination von Knoten eine komplexe Abfrage möglich ist (beispielsweise Berichte über Golf und Airbag)

Ein zusätzlicher Unterschied besteht darin, daß im Stand der Technik ausschließlich funktional typisierte Kanten (Generalisierung, Spezialisierung, Synonym) bekannt sind, während erfindungsgemäß bedeutungshaltige Kanten verwendet werden. Des weiteren sind wiederum im Unterschied zum Stand der Technik, wo ein Netzwerk nur von einem Administrator gepflegt wird, erfindungsgemäß Benutzerinteraktionen für das lernende Weiterentwickeln des Netzwerkes vorgesehen.

In weiterer besonders vorteilhafter Ausgestaltung der Erfindung erfolgt gemäß Anspruch 8 für im Rahmen einer Suche nach wenigstens einem durch einen Knoten (Suchknoten) des semantischen Netzes gegebenen Suchbegriff ermittelte Textdokumente ein Vergleich des Textinhalts mit in zu dem Suchknoten benachbarten Knoten enthaltenen Suchbegriffen, und bei Übereinstimmung von Textinhalt eines Textdokuments mit einem Suchbegriff eines benachbarten Knotens erfolgt das Erzeugen einer dem Textdokument zugeordneten Datei und die Aufnahme einer Kurzbezeichnung des den Suchbegriff beinhaltenden Knotens in die Datei als Inhaltsangabe des Textdokuments. Erfindungsgemäß basiert demnach das automatisierte Erstellen von Inhaltsangaben von Textdokumenten auf der Verwendung eines semantischen Netzes, das aus Knoten und Kanten aufgebaut ist, in denen Suchformulierungen (Suchstrings) abgespeichert sind. Die Suchbausteine bildenden Knoten und Kanten stellen somit eine semantisch aussagekräftige Struktur dar, deren Inhalt(e) einer Untersuchung von Textdokumenten zugrundegelegt wird. Diese Textdokumente werden im Rahmen einer beliebig gestalteten Suche ermittelt, die auf der Grundlage wenigstens eines durch einen Knoten (Suchknoten) des semantischen Netzes gegebenen Suchbegriffs durchgeführt wird. Dabei kann es sich beispielsweise um eine Volltextsuche handeln. Der Textinhalt jedes in dieser Suche ermittelten Textdokumentes wird dann mit Suchbegriffen verglichen, die in zu dem Suchknoten nahen Knoten enthalten sind. Stimmt ein Textinhalt eines Textdokuments mit einem Suchbeqriff eines nahen Knotens überein, so wird erfindungsgemäß eine dem Textdokument zugeordnete Datei erzeugt, in die zur Inhaltskurzangabe des Textdokumentes eine Kurzbezeichnung des den Suchbegriff beinhaltenden Knotens geschrieben wird. Die Suchbausteine bildenden Knoten und Kanten sind durch den Anwender im Zuge seiner Recherchetätigkeit verfeinerbar, so daß, sich das Netzwerk während der Nutzung weiterentwickelt. Die in der Darstellung hinterlegte Fähigkeit der Weiterentwicklung des Netzwerkes wirkt sich auch in einer zunehmenden Qualität der Inhaltsangaben aus, da auch die entfernten Knoten ihrerseits Gegenstand einer Suchanfrage sein können.

In Ausgestaltung des erfindungsgemäßen Verfahrens wird ein Verfahren zum automatisierten Erstellen von Inhaltsangaben von Textdokumenten mit den Merkmalen des Anspruchs 10 vorgeschlagen. Zur weiteren Lösung der der Erfindung zugrundeliegenden Aufgabe wird ein Verfahren zum automatisierten Erstellen von Inhaltsangaben von Textdokumenten mittels eines erfindungsgemäßen Datenverarbeitungssystems mit den Merkmalen des Anspruchs 10 vorgeschlagen. Das erfindungsgemäße Verfahren umfaßt die folgenden Schritte:
- Durchführen einer Suche in dem mindestens einen Datenbestand nach wenigstens einem durch einen Knoten (Suchknoten) des semantischen Netzes gegebenen Suchbegriff und Ermitteln von den Suchbegriff enthaltenden Textdokumenten;
- Vergleich des Textinhaltes jedes ermittelten Textdokumentes mit in zu dem Suchknoten nahen und mit diesem über eine oder mehrere kanten im semantischen Netz verbundenen Knoten enthaltenen Suchbegriffen;
- bei Übereinstimmung von Textinhalt eines Textdokumentes mit einem Suchbegriff eines solchen nahen Knotens Erzeugen einer dem Textdokument zugeordneten Datei, in die als Inhaltsangabe des Textdokumentes eine Kurzbezeichnung des den Suchbegriff beinhaltenden Knotens geschrieben wird Vorteilhafterweise wird in die Datei zur Inhaltsangabe des Textdokuments eine Kurzbezeichnung der den Suchknoten und den nahen Knoten verbindenden Kante(n) geschrieben. Durch den ergänzten Aufbau der Inhaltsangabe aus einer Kurzbezeichnung des Knotens, die eine den in dem Knoten abgelegten Suchstring wiedergebende Begriffsbedeutung darstellt, und einer Kurzbezeichnung der verbindenden Kante(n), die eine die Begriffsbedeutung des Suchknotens und die Begriffsbedeutung des nahen Knotens semantisch aussagekräftige Verbindung darstellt, wird eine Inhaltsangabe erhalten, die eine semantische Aussage darstellt und somit zur semantisch einwandfreien Kurzbeschreibung des zugeordneten Textdokuments taugt.

Um eine relevanzbezogene Rangfolge der ermittelten Textdokumente zu erhalten, erfolgt in vorteilhafter Ausgestaltung der Erfindung eine Hierarchisierung der Inhaltsangaben in Abhängigkeit des Abstandes der Suchbegriffe des Suchknotens und des nahen Knotens in dem Textinhalt jedes Textdokumentes. Erfindungsgemäß erfolgt somit eine kombinierte Suche nach Textstrings derart, daß die Suchbegriffe des Suchknotens und des nahen Knotens auf ihre Nähe in dem Textdokument hin untersucht werden, und daß das Ergebnis dieser Suche für die Erstellung einer Rangfolge (Ranking) der angegebenen Inhaltsangaben verwendet wird, wobei vorzugsweise nahestehende Begriffe eine höhere Stellung in der Rangfolge erhalten als weiter voneinander entfernt liegende Begriffe.

In weiterer Ausgestaltung der Erfindung sind die zu dem Suchknoten nahen Knoten direkt benachbarte Knoten. Vorteilhafterweise umfassen die zu dem Suchknoten nahen Knoten auch benachbarte Knoten direkt benachbarter Knoten, so daß eine komplexere, d.h. detailliertere Inhaltsangabe ermöglicht wird.

In besonderer vorteilhafter Ausgestaltung sind mindestens zwei nahe Knoten zu einem Netzausschnitt zusammenfaßbar, so daß eine durch den Netzausschnitt gegebene komplette Aussage, bestehend aus mindestens zwei Knoten und der bzw. den die Knoten verbindenden Kante, in einem Textdokument gesucht werden kann.

Des weiteren wird Schutz für ein Computerprogramm mit Programmcode beansprucht, der dazu geeignet ist, bei Ablauf auf einem Computer ein erfindungsgemäßes Verfahren durchzuführen. In Ausgestaltung ist das Computerprogramm auf einem computerlesbaren Medium gespeichert.

Es versteht sich, daß die vorstehend genannten und die nachstehend noch zu erläuternden Merkmale nicht nur in der jeweils angegebenen Kombination, sondern auch in anderen Kombinationen oder in Alleinsteliung verwendbar sind, ohne den Rahmen der vorliegenden Erfindung zu verlassen.

Die Erfindung wird nachfolgend unter Bezugnahme auf die Zeichnung anhand von Ausführungsbeispielen näher erläutert.
- Figur 1: zeigt in schematischer Darstellung ein aus Suchbausteinen gebildetes semantisches Netz für ein erfindungsgemäßes Datenverarbeitungssystem.
- Figur 2: zeigt ein erstes Beispiel für eine aus den Suchbausteinen der Figur 1 erstellten Suchanweisung.
- Figur 3: zeigt ein zweites Beispiel für eine aus der Suchbausteinen der Fiaur 1 erstellten Suchanweisung.
- Figur 4: zeigt ein weiteres semantisches Netz zur Veranschaulichung des erfindungsgemäßen Verfahrens zum automatisierten Erstellen von Inhaltsangaben von Textdokumenten.
- Figur 5: zeigt das semantische Netz der Figur 4 mit einer Erweiterung.

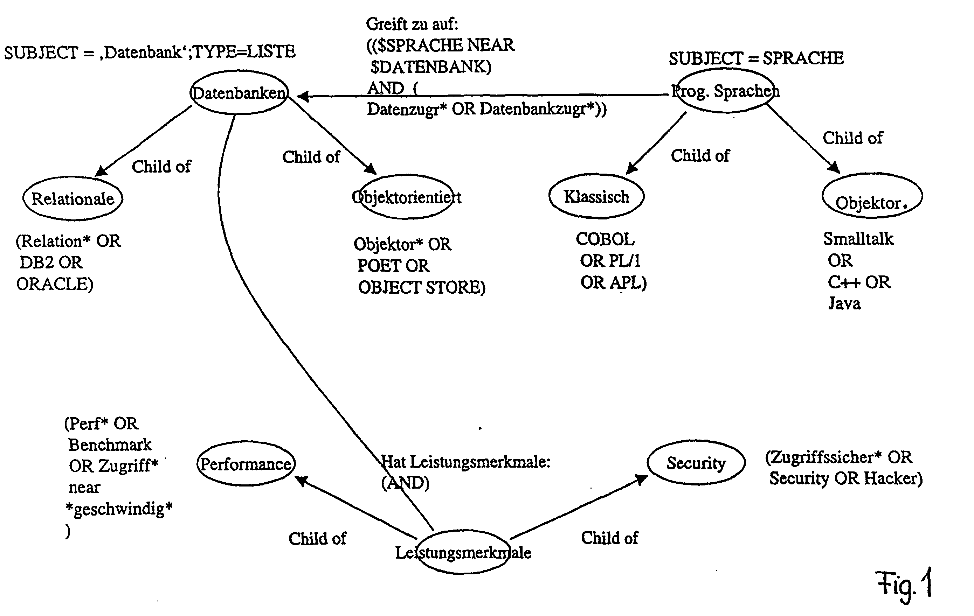

Figur 1 zeigt ein semantisches Netz für ein erfindungsgemäßes Datenverarbeitungssystem, das aus einer Vielzahl von Suchbausteinen aufgebaut ist. Die Suchbausteine bilden dabei die mit ovalen Umrissen dargestellten Knoten und die die Knoten verbindenden Kanten des semantischen Netzes. Das in der Figur 1 dargestellte semantische Netz umfaßt drei Hauptknoten "Datenbanken", "Programmiersprachen" und "Leistungsmerkmale". Jedem dieser drei Hauptknoten sind jeweils zwei Unterknoten zugeordnet, die jeweils Kinder ihres Hauptknotens darstellen und somit auch die Eigenschaften des Hauptknoten beinhalten (Vererbung). Neben jedem der Knoten ist dessen Inhalt (SUBJECT) angegeben, also beispielsweise "SPRACHE" als Inhalt des Knotens "Programmiersprachen" und "COBOL OR PL/1 OR APL" als Inhalt des Unterknotens "Klassische (Programmiersprachen)". Erfindungsgemäß beinhalten die die Knoten des semantischen Netzes bildenden Suchbausteine somit Suchanfragen, die mit Suchanfragen anderer Knoten kombinierbar sind.

Das Kombinieren einzelner Suchanfragen der Knoten erfolgt gemäß in den die Knoten verbindenden Kanten abgespeicherten Verknüpfungsanweisungen. Wie aus der Figur 1 ersichtlich ist, sind die einzelnen Knoten über Kanten, dargestellt durch Pfeile, miteinander verbunden. Diese Kanten sind ebenfalls durch Suchbausteine gebildet, die Verknüpfungsanweisungen enthalten. So beinhaltet beispielsweise die Kante "Hat Leistungsmerkmale" zwischen dem Knoten "Datenbanken" und dem Knoten "Leistungsmerkmale" die Verknüpfungsanweisung AND. Die Kanten zwischen Hauptknoten und Unterknoten beinhalten jeweils die Vererbungsinformation CHILD OF.

Das in Figur 1 dargestellte semantische Netz als Grundlage für eine Erstellung einer komplexen Suchanweisung kann dem Benutzer über einen Bildschirm des Datenverarbeitungssystems entweder in der dargestellten Verzweigungsstruktur (hierarchische Darstellung) ohne die detaillierten Angaben zum Inhalt der Knoten und Kanten angezeigt werden, oder in einer tabellarischen Darstellung der folgenden Art:
- Programmiersprachen
   - Klassische
   - Objektorientierte
- Datenbanken
   - Relationale
   - Objektorientierte
- Leistungsmerkmale
   - Performance
   - Security

Aus der dargestellten Anzeige kann der Benutzer durch Auswählen einzelner Stichworte (Knoten), beispielsweise durch Anklicken mit dem Mauszeiger, eine individuelle Suchanweisung zusammenstellen.

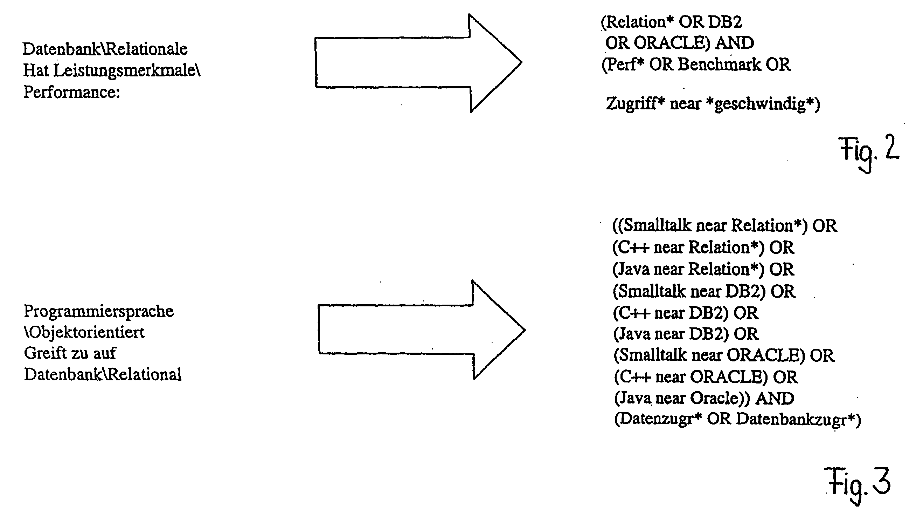

Figur 2 zeigt als erstes Beispiel eine Suchanweisung, die in dem semantischen Netz der Figur 1 durch Auswählen der Knoten "Datenbanken", "Relationale" und "Performance" erzeugt wird. Die linke Seite der Figur 2 zeigt dabei die ausgewählten Knoten und die die Verknüpfungsanweisung enthaltende Kante, die zu der rechts von dem Pfeil der Figur 2 angegebenen Suchanweisung führen. Die Besonderheit bei diesem Beispiel liegt darin, daß der Hauptknoten "Leistungsmerkmale" keinen eigenen Inhalt besitzt, sondern direkt in die Unterknoten "Performance" bzw. "Security" weiterverweist.

Figur 3 zeigt ein weiteres Beispiel für eine aus Knoten und Kanten des semantischen Netzes der Figur 1 zusammengesetzte Suchanweisung. Wählt der Benutzer die Knoten "Programmiersprachen", "Objektorientierte" und "Datenbanken", "Relationale" aus, so findet eine Verknüpfung auf der Grundlage der links in der Darstellung der Figur 3 angegebenen Knoten und der Kante "Greift zu auf" statt, was zu der rechts in der Darstellung der Figur 3 angegebenen, relativ komplexen Suchanweisung führt.

Wie aus diesen Beispielen erkennbar ist, sind erfindungsgemäß durch einfaches Auswählen von Suchbausteinen in der Anzeige des erfindungsgemäßen Datenverarbeitungssystems relativ umfangreiche und komplexe Suchanweisungen erstellbar, wobei es sich bei dem als Beispiel dargestellten semantischen Netz um eine sehr einfache Struktur handelt, die zur Veranschaulichung des der Erfindung zugrundeliegenden Prinzips dient. In der Praxis kommen sehr viel umfangreichere semantische Netze zur Anwendung, die die Erstellung von deutlich komplexeren Suchanweisungen zulassen.

Die Erfindung gestattet des weiteren die Möglichkeit, eine einmal erstellte Suchanweisung, beispielsweise die in Figur 3 dargestellte, "abzuspeichern", d.h. die Kombination der ausgewählten Suchbausteine abzulegen und bei Bedarf wieder aufzurufen, um die Suche erneut durchzuführen. Vorteilhafterweise erfolgt diese wiederholte Durchführung der Suche durch die Suchmaschine automatisch in einem durch den Benutzer vorgegebenen Zeitabstand. Dies eröffnet die Möglichkeit, daß beispielsweise einmal wöchentlich in einem bestimmten Datenbestand eine Suche nach bestimmten Dokumenten vorgenommen wird, so daß der Benutzer regelmäßig über aktuelle Änderungen des Datenbestandes in dem ihn interessierenden Bereich informiert ist.

Zur Weiterentwicklung des semantischen Netzwerks sind erfindungsgemäß vorteilhafterweise Benutzerinteraktionsprozesse vorgesehen, die ausgehend von der Recherchetätigkeit eines Anwenders das abgespeicherte semantische Netzwerk erweitern. Bei Eingabe einer neuen Suchformulierung durch einen Anwender wird von dem Benutzerinteraktionsprozess ein Abgleich mit den bereits abgespeicherten Knoten des semantischen Netzwerks durchgeführt. Wird beispielsweise unter Bezugnahme auf die Darstellung der Figur 1 die Suchformulierung "relationale Datenbanken NEAR IBM" eingegeben, so wird das semantische Netzwerk nach bereits bestehenden Knoten für beide die eingegebenen Suchformulierung bildenden Teilformulierungen "relationale Datenbanken" und "IBM" durchsucht. Bestehen diese Knoten bereits, nämlich der Knoten "relationale Datenbanken" als Unterknoten von "Datenbanken" und "IBM" als Unterknoten von "DV-Anbieter", so erfragt das Datenverarbeitungssystem die semantische Bedeutung des Operators NEAR und erstellt zwischen den beiden Knoten "DV-Anbieter" und "Datenbanken" die Kante "ist Hersteller von". In dem in der Figur 1 dargestellten Beispiel semantischen Netzwerk ist der beschriebene Knoten "DV-Anbieter" jedoch nicht in dem semantischen Netzwerk enthalten, so daß vor der geschilderten Erstellung der neuen Kante "ist Hersteller von" zuerst ein Knoten "DV-Anbieter" mit Unterknoten "IBM" erstellt werden muß.

In der Praxis könnte ein derartiger Benutzerinteraktionsprozess wie folgt implementiert werden. Zuerst wird der Endbenutzer aufgefordert, die verwendeten Suchformulierungen zu optimieren, und die Verbindung zwischen Semantik der Knoten und Kanten (Knoten- und Kantennamen) und Volltextdokumenten zu verbessern. Dann werden neue Suchbegriffe als neue Knoten in das Suchnetz integriert und anschließend wird die statistische Häufigkeit der gemeinsamen Verwendung von Knoten aufbereitet, die noch nicht über eine Kante verbunden sind, und daraus das Einfügen einer Kante abgeleitet, woraufhin ein Vergleich einer eingegebenen Suchformulierung mit dem abgespeicherten Knoten des semantischen Netzes und eine Abspeicherung der eingegebenen Suchformulierung in dem semantischen Netz unter Berücksichtigung der semantischen Bedeutung erfolgt, sofern es sich bei der eingegebenen Suchformulierung um eine neue Suchformulierung handelt.

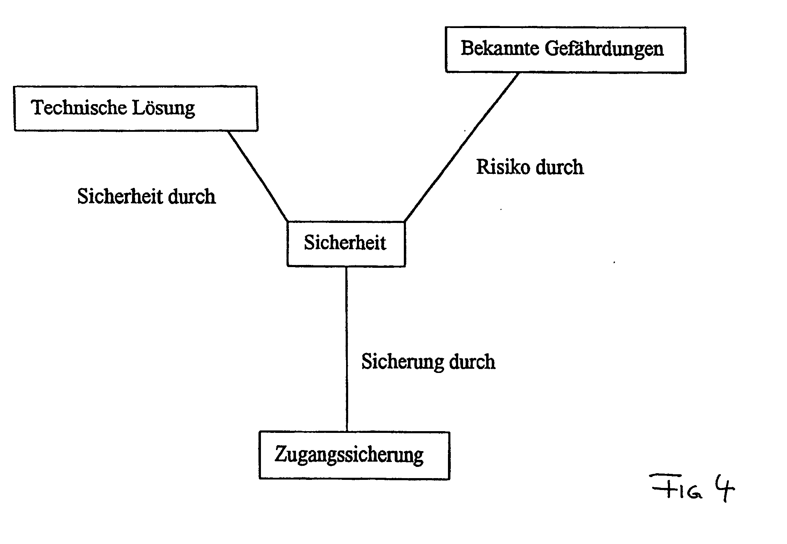

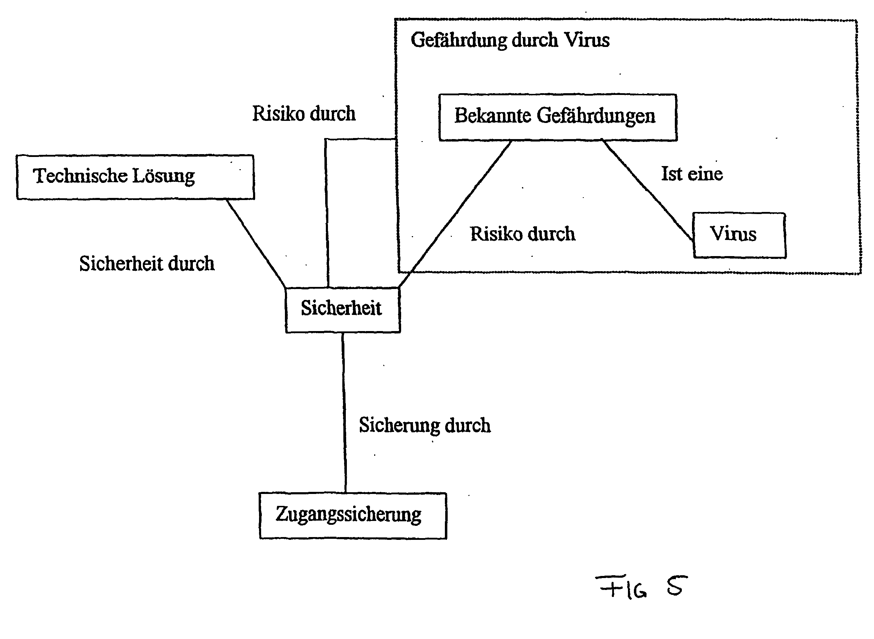

Anhand der in den Figuren 4 und 5 dargestellten semantischen Netze wird nun das erfindungsgemäße Verfahren zum automatisierten Erstellen von Inhaltsangaben von Textdokumenten erläutert.

Figur 4 zeigt ein einfaches semantisches Netz mit vier Knoten und drei Kanten. Der in dem semantischen Netz der Figur 4 zentral angeordnete Knoten verfügt über den Begriffsinhalt "Sicherheit", die drei den zentral angeordneten Knoten umgebenden Knoten verfügen über die Begriffsinhalte "technische Lösung", "bekannte Gefährdungen" und "Zugangssicherung". Die den zentralen Knoten "Sicherheit" mit den drei umliegenden Knoten verbindenden Kanten stellen eine UND-Verknüpfung dar, so daß jeweils die der Figur 4 entnehmbare semantische Bedeutung "Sicherheit durch technische Lösung", "Risiko der Sicherheit durch bekannte Gefährdungen" und "Sicherheit/Sicherung durch Zugangssicherung" vorliegt.

Das in Figur 4 dargestellte semantische Netz hat somit die folgende Aussage: Die Sicherheit (im Sinne der Sicherheit eines Datenverarbeitungssystems gegen externe Angriffe) betreffend Verlust, Veränderung oder Ausspionierung von Daten wird garantiert durch eine technische Lösung (beispielsweise spezielle Programme (Patches) des Herstellers eines Systems). Die Sicherheit unterliegt dem Risiko durch bekannte Gefährdungen wie beispielsweise Viren oder andere Angriffe, und Sicherheit wird erreicht durch Zugangssicherungen, wie beispielsweise "Firewalls".

Dabei können die Knoten durch folgende Suchstrings definiert sein:
Zugangssicherung: (Firewal*}
Technische Lösung: {Patc* OR (update NEAR Sicherheits*) OR Bugfix}
Bekannte Gefährdung: {Abstur* OR Stillsta* OR Schutzverl*}

Der Knoten "Sicherheit" sei ein beliebig definierter Knoten, der Basis für eine Suche war und deren Ergebnis nun als Dokumentenmenge vorliegt. Die Kanten sollen wie ausgeführt die Bedeutung haben, daß sie Knoten über UND verknüpfen.

In der Suche wurden folgende drei Dokumente gefunden:
Dokument 1:
   Titel: Virus gemeldet
   Inhalt: Es wurde ein neuer Virus gefunden, der jeden Windows NT-PC zum Stillstand bringt.
Dokument 2:
   Titel: Hersteller reagiert
   Inhalt: Zu dem Virus, der zu einer Schutzverletzung unter
   Windows NT führt, wurde vom Hersteller ein Bugfix herausgegeben.
Dokument 3:
   Titel: Methoden des Sicherheitsmanagements
   Inhalt: Firewalls garantieren die Sicherheit gegen den Einbruch über das Netzwerk.

Mit Hilfe des erfindungsgemäßen Verfahrens kann nun eine Inhaltsangabe generiert werden, indem die ermittelten drei Dokumente gegen die den Suchknoten "Sicherheit" umgebenden Knoten, die dem Suchknoten nahe Knoten darstellen, getestet werden. Finden die Suchstrings innerhalb der Knoten passende Texte, so werden die Kante und der Knoten als Inhaltsbeschreibung verwendet. Dieses erfindungsgemäße Vorgehen führt bei den drei vorstehend beschriebenen ermittelten Dokumenten zum folgenden Ergebnis.
Dokument 1:
   Titel: Virus gemeldet
   Inhaltskurzangabe:
   Risiko durch bekannte Gefährdung
Dokument 2:
   Titel: Hersteller reagiert
   Inhaltskurzangabe:
   Risiko durch bekannte Gefährdung, Sicherheit durch technische Lösung
Dokument 3:
   Titel: Methoden des Sicherheitsmanagements
   Inhaltskurzangabe:
   Sicherung durch Zugangssicherung

Das erfindungsgemäße Verfahren kann erweitert werden, indem Knoten eines betrachteten Ausschnittes zu Aussagen zusammengefaßt werden und die komplette Aussage in einem ermittelten Dokument gesucht wird. Dazu sei das semantische Netz der Figur 4 entsprechend der Darstellung in Figur 5 erweitert, indem der Knoten "bekannte Gefährdungen" mit einem weiteren Knoten "Virus" (der den Suchstring "Viru*" enthält) über eine UND-Kante verbunden ist. Dabei werden also die Knoten "Virus" und "bekannte Gefährdung" zu einer Aussage zusammengefaßt, was in Figur 5 durch einen gepunktet dargestellten Rahmen veranschaulicht ist.

Für das vorstehend beschriebene Ergebnisdokument Nr. 2 ergibt sich dann die folgende Inhaltsangabe:
Dokument 2:
Titel: Hersteller reagiert
Inhaltsangabe:
Risiko durch Gefährdung durch Virus, Sicherheit durch technische Lösung

Des weiteren ist es erfindungsgemäß möglich, daß die Suchbegriffe des Knotens und der zu dem Knoten nahe Knoten auf ihre Nähe in dem Dokument hin untersucht werden und daß das Ergebnis dieser Untersuchung für ein Ranking, also für eine Rangfolgenerstellung bzw. Hierachisierung, der angegebenen Inhaltsangaben verwendet wird. Dabei erhalten einander näherstehende Begriffe eine höhere Rangordnung als weiter voneinander entfernt liegende Begriffe.

Beinhaltet ein ermitteltes Dokument beispielsweise die Begriffe "Datenbank", "Netzwerk", "Performance" und "Ausfallsicherheit", deren entsprechenden Knoten in einem "Netzwerk" stehen, und sind die Begriffe "Datenbank" und "Netzwerk" jeweils mit den Begriffen "Performance" und "Ausfallsicherheit" über Kanten verbunden, so ergibt das eine Inhaltsangabe der folgenden Form:

| | |
|---|---|
| Datenbank Kante | Performance |
| Netzwerk Kante | Performance |
| Datenbank Kante | Ausfallsicherheit |
| Netzwerk Kante | Ausfallsicherheit |

Bei dieser Inhaltsangabe ist die Reihenfolge der Aussagen zufällig bestimmt. Tritt nun in dem ermittelten Dokument jedoch der Begriff "Datenbank" in der Nähe von "Performance" auf und der Begriff "Netzwerk" steht in großer Nähe zu dem Begriff "Ausfallsicherheit", so kann eine Rangfolge der Inhaltsangaben über diese ermittelte Nähe der Begriffe erstellt werden, die beispielsweise dann wie folgt aussieht:

| | |
|---|---|
| Datenbank Kante | Performance |
| Netzwerk Kante | Ausfallsicherheit |
| Datenbank Kante | Ausfallsicherheit |
| Netzwerk Kante | Performance, |

so daß die Reihenfolge der Inhaltsangaben die Relevanz der Aussage in dem ermittelten Dokument wiedergibt.

Das erfindungsgemäße Datenverarbeitungssystem und das erfindungsgemäße Verfahren zum automatisierten Erstellen von Inhaltsangaben sind selbstverständlich nicht auf die dargestellten Ausführungsbeispiele beschränkt. Vielmehr sind sie aufgrund der Verwendung eines semantischen Netzes zur Anwendung in komplexen Zusammenhängen geeignet, wobei zu betonen ist, daß die die Knoten verbindenden Kanten nicht auf übliche einfache UND- oder ODER-Verknüpfungen beschränkt sind, sondern auch selbst semantische Aussagen aufweisen können, was in den Darstellungen der Figuren durch die den Kanten zugeordneten "Namen" verdeutlicht ist.

Unter dem Begriff des semantischen Netzes wird in dieser Patentanmeldung jegliches semantische Struktur verstanden, die sowohl als Netz als auch als "Frames" oder andere geeignete Strukturen dargestellt sein kann.

## Patentansprüche

1. Datenverarbeitungssystem mit mindestens einer Benutzereinheit, einer Speichereinheit, einer Verbindung zu mindestens einem insbesondere externen elektronischen Datenbestand und mit einer Suchmaschine zur Durchführung von Datenrecherchen in dem mindestens einen Datenbestand,
**dadurch gekennzeichnet,**
**daß** eine Vielzahl von Suchformulierungen für die Suchmaschine als Knoten und Kanten eines semantischen Netzes bildende Suchbausteine abgespeichert sind, wobei zur Durchführung einer Datenrecherche eine Zusammensetzung der Suchbausteine zu einer beliebig gestaltbaren komplexen Suchanweisung erfolgt, und daß die Knoten des semantischen Netzes bildende Suchbausteine Suchanfragen enthalten und die Kanten des semantischen Netzes bildende Suchbausteine Verknüpfungsanweisungen enthalten.

2. Datenverarbeitungssystem nach Anspruch 1, bei dem eine Darstellung der Vielzahl von Suchformulierungen als Baumstruktur auf einer Anzeigeeinheit der Benutzereinheit erfolgt.

3. Datenverarbeitungssystem nach Anspruch 1, bei dem eine Darstellung der Vielzahl von Suchformulierungen in tabellarischer Form auf einer Anzeigeeinheit der Benutzereinheit erfolgt.

4. Datenverarbeitungssystem nach einem der Ansprüche 1 bis 3, bei dem eine von einem Benutzer aus Suchbausteinen zusammengesetzte Suchanweisung abspeicherbar ist.

5. Datenverarbeitungssystem nach einem der Ansprüche 1 bis 4, bei dein ein automatisches Durchführen der abgespeicherten Suchanweisung in durch den Benutzer vorgebbaren Zeitintervallen erfolgt.

6. Datenverarbeitungssystem nach einem der Ansprüche 1 bis 5, bei dem Benutzerinteraktionsprozesse zu einer Weiterentwicklung des semantischen Netzwerks durch die Recherchentätigkeit eines Anwenders vorgesehen sind.

7. Datenverarbeitungssystem nach Anspruch 6, das bei Eingabe einer Suchformulierung die eingegebene Suchformulierung mit den abgespeicherten Knoten des semantischen Netzes vergleicht and bei dem eine Abspeicherung der eingegebenen Suchformulierung in dem semantischen Netz unter Berücksichtigung der semantischen Bedeutung erfolgt, sofern es sich bei der eingegebenen Suchformulierung um eine neue Suchformulierung handelt.

8. Datenverarbeitungssystem nach einem der Ansprüche 1 bis 7, **dadurch gekennzeichnet, daß** für im Rahmen einer Suche nach wenigstens einem durch einen Knoten (Suchknoten) des semantischen Netzes gegebenen Suchbegriff ermittelte. Textdokumente ein Vergleich des Textinhalts mit in zu dem Suchknoten nahen Knoten enthaltenen Suchbegriffen erfohgt und bei Übereinstimmung von Textinhalt eines Textdokuments mit einem Suchbegriff eines benachbarten Knotens das Erzeugen einer dem Textdokument zugeordneten Datei und die Aufnahme einer Kurzbezeichnung des den Suchbegriff beinhaltenden Knotens in die Datei als Inhaltsangabe des Textdokuments erfolgt.

9. Verfahren zur Durchführung einer Datenrecherche mittels eines Datenverarbeitungssystems, das eine Verbindung zu mindestens einem insbesondere externen elektronischen Datenbestand mit Textdokumenten und eine Suchmaschine zur Durchführung von Datenrecherchen in dem mindestens einen Datenbestand aufweist, **dadurch gekennzeichnet, daß** Suchformulierungen für die Suchmaschine als Knoten und Kanten eines semantischen Netzes bildende Suchbausteine abgespeichert sind, die zur Durchführung einer Datenrecherche zu einer beliebig gestaltbaren komplexen Suchanweisung zusammengesetzt werden, und daß die Knoten des semantischen Netzes bildende Suchbausteine Suchanfragen enthalten und die Kanten des semantischen Netzes bildende Suchbausteine Verknüpfungsanweisungen enthalten.

10. Verfahren nach Anspruch 9, bei dem zum automatisierten Erstellen von Inhaltsangaben von Textdokumenten die folgenden Schritte durchgeführt werden:
- Durchführen einer Suche in dem mindestens einen Datenbestand nach wenigstens einem durch einen Knoten (Suchknoten) des semantischen Netzes gegebenen Suchbegriff und Ermitteln von den Suchbegriff enthaltenden Textdotumenten;
- Vergleich des Textinhaltes jedes ermittelten Textdokumentes mit in zu dem Suchknoten nahen und mit diesem über eine oder mehrere kanten im semantischen Netz verbundenen Knoten enthaltenen Suchbegriffen;
- bei Übereinstimmung von Textinhalt eines Textdokumentes mit mindestens einem Suchbegriff eines solchen nahen Knotens Erzeugen einer dem Textdokument zugeordneten Datei, in die als Inhaltsangabe des Textdokumentes eine Kurzbezeichnung des mindestens einen den bzw. die Suchbegriffe beinhaltenden Knotens geschrieben wind.

11. Verfahren nach Anspruch 10, **dadurch gekennzeichnet, daß** in die Datei zur Inhaltsangabe des Textdokuments eine Kurzbezeichnung der den Suchknoten und den nahen Knoten verbindenden Kante(n) geschrieben wird.

12. Verfahren nach Anspruch 10 oder 11, **dadurch gekennzeichnet, daß** eine Hierarchisierung der Textdokumente in Abhängigkeit des Abstandes der Suchbegriffe des Suchknotens und des nahen Knotens in dem Textinhalt jedes Textdokumentes erfolgt.

13. Verfahren nach der Ansprüche 10 bis 12, **dadurch gekennzeichnet, daß** zu dem Suchknoten nahe Knoten direkt benachbarte Knoten sind.

14. Verfahren nach einem der Ansprüche 10 bis 13, **dadurch gekennzeichnet, daß** zu dem Suchknoten nahe Knöten benachbarte Knoten direkt benachbarter Knoten umfassen.

15. Verfahren nach einem der Ansprüche 10 bis 14, **dadurch gekennzeichnet, daß** mindestens zwei nahe Knoten zu einem Netzausschnitt zusammenfaßbar sind.

16. Verfahren nach einem der Ansprüche 10 bis 15, **dadurch gekennzeichnet, daß** eine Kombination von Suchknoten und nahen Knoten durch den Anwender frei wählbar ist.

17. Computerprogramm mit Programmcode, der dazu geeignet ist, bei Ablauf auf einem Computer ein Verfahren nach einem der Ansprüche 1 bis 16 durchzuführen.

18. Computerprogramm nach Anspruch 17, das auf einem computerlesbaren Medium gespeichert ist.

## Claims

1. A data processing system comprising at least one user unit, a memory, a connection to at least one in particular external electronic database and a search engine for carrying out data queries in the at least one database,
**characterized in**
**that** a plurality of search formulations for the search engine is stored as search components forming nodes and edges of a semantic network, said search components being combined into an arbitrarily con figured complex search instruction to carry out a data search,
and **that** the search components forming the nodes of the semantic network contain search inquiries and the search components forming the edges of the semantic network contain operational instructions.

2. Data processing system according to claim 1, wherein a representation of the plurality of search formulations is provided in the form of a tree structure on a display of the user unit.

3. Data processing system according to claim 1, wherein a representation of the plurality of search formulations is provided in tabular form on a display unit of the user unit.

4. Data processing system according to one of claims 1 to 3, wherein a search instruction composed by the user by means of search components can be stored.

5. Data processing system according to one of claims 1 to 4, wherein the stored search instruction is carried out automatically at time intervals that can be preset by the user.

6. Data processing system according to one of claims 1 to 5, wherein user interaction processes take place to further develop the semantic network by means of the querying activity of the user.

7. Data processing system according to claim 6, wherein, upon input of a search formulation, a comparison is implemented between the entered search formulation with the stored nodes of the semantic network and the entered search formulation is stored in the semantic network while taking account of the semantic significance provided that the entered search formulation is a new one.

8. Data processing system according to one of claims 1 to 7, **characterized in that**, for textual documents ascertained by a search for a search term given by at least one node (search node) of the semantic network, the contents of the text is compared with search concepts contained in nodes near the search node and upon agreement between the textual contents of a textual document with a search concept of an adjacent node, a file associated with the textual document is generated and a short designation of the node containing the search concept is entered in to the file as a statement of contents of the textual document.

9. A method to carry out a data search by means of a data processing system comprising a connection to at least one in particular external electronic database with textual documents and a search engine for carrying out data queries in the at least one database,
**characterized in**
**that** search formulations for the search engine are stored as search components forming nodes and edges of a semantic network, said search components being combined into an arbitrarily configured complex search instruction to carry out a data search,
and **that** the search components forming the nodes of the semantic network contain search inquiries and the search components forming the edges of the semantic network contain operational instructions.

10. A method according to claim 9, comprising the following steps to generate in automated manner statements of contents of textual documents:
- carrying out a search in the at least one database for at least one search concept given by a node (search node) of the semantic network and ascertaining textual documents containing the search concept,
- comparing the textual content of each ascertained textual document with search concepts contained in nodes which are near the search node and connected with the search node via one or several edges of the semantic network,
- upon correspondence of textual content of a textual document with at least one search concept of such a near node, generating a file associated to the textual document, a short designation of at the least one node containing the search concept being entered as a statement of contents into said file.

11. A method according to claim 10, **characterized in that** a short designation of the edge (s) connecting the search node and the near nodes is entered into the file relating to the statement of contents of the textual document.

12. A method according to claim 10 or 11, **characterized in that** hierarchization of the textual documents is carried out as a function of the gap between the search concepts of the search node and the near node in the textual contents of each textual document.

13. A method according to one of claims 10 to 12, **characterized in that** nodes near the search node are directly adjacent nodes.

14. A method according to one of claims 10 to 13, **characterized in that** nodes near the search node include nodes that are adjacent to directly adjacent nodes.

15. A method according to one of claims 10 to 14, **characterized in that** at least two near nodes may be combined into one network section.

16. A method according to one of claims 10 to 15, **characterized in that** the user may freely select a combination of search nodes and near nodes.

17. A computer program with program code which is suitable to perform a method according one of claims 9 to 16 when run on a computer.

18. A computer program according to claim 17, the computer program being stored on a computer readable medium.

## Revendications

1. Système de traitement de données avec au moins une unité d'utilisateur, une unité de mémorisation, une connexion à au moins un stock de données électronique en particulier externe et avec une machine de recherche destinée à conduire des recherches de données dans au moins le stock de données précité, **caracterisé en ce qu'**une multiplicité de formulations de recherche pour la machine de recherche sont mémorisées comme éléments constitutifs de recherche qui forment des noeuds et arêtes d'un réseau sémantique, pour la réalisation d'une recherche de données les éléments constitutifs de recherche étant assemblés pour former une instruction complexe de recherche qui peut être formée arbitrairement, et **en ce que** les éléments constitutifs de recherche formant des noeuds du réseau sémantique comprennent des demandes de recherche et les éléments constitutifs de recherche formant des arêtes du réseau sémantique comprennent des instructions opérationnelles.

2. Système de traitement de données selon la revendication 1, dans lequel une représentation de la multiplicité de formulations de recherche est réalisée comme structure d'arbre sur une unité d'affichage de l'unité d'utilisateur.

3. Système de traitement de données selon la revendication 1, dans lequel une représentation de la multiplicité de formulations de recherche est réalisée sous forme tabellaire sur une unité d'affichage de l'unité d'utilisateur.

4. Système de traitement de données selon l'une des revendications 1 à 3, dans lequel une instruction de recherche composée d'éléments constitutifs de recherche par un utilisateur peut être mémorisée.

5. Système de traitement de données selon l'une des revendications 1 à 4, dans lequel une réalisation automatique de l'instruction mémorisée de recherche se fait à des intervalles de temps qui peuvent être déterminés par l'utilisateur.

6. Système de traitement de données selon l'une des revendications 1 à 5, dans lequel on prévoit des processus d'interaction d'utilisateur pour un développement du réseau sémantique par l'activité de recherche d'un utilisateur.

7. Système de traitement de données selon la revendication 6, dans lequel, dans le cas d'une entrée/introduction d'une formulation de recherche, la formulation de recherche introduite est comparée avec les noeuds mémorisés du réseau sémantique et la formulation de recherche introduite est mémorisée dans le réseau sémantique en considération de la signification sémantique, s'il s'agit, dans le cas de la formulation de recherche introduite, d'une nouvelle formulation de recherche.

8. Système de traitement de données selon l'une des revendications 1 à 7, **caractérisé en ce que**, pour des documents de texte recherchés dans le cadre d'une recherche d'au moins un terme de recherche donné par un noeud (noeud de recherche) du réseau sémantique, le contenu du texte est comparé avec des termes de recherche contenus dans les noeuds voisins du noeud de recherche et que, dans le cas d'une concordance du contenu de texte d'un document de texte avec un terme de recherche d'un noeud voisin, un fichier associé au document de texte est généré et une désignation abrégée du noeud contenant le terme de recherche est écrite dans le fichier entant que résumé du document de texte.

9. Procédé destiné à effectuer une recherche de données au moyen d'un système de traitement de données qui présente une connexion à au moins un stock de données électronique en particulier externe avec des documents de texte ainsi qu'une machine de recherche destinée à effectuer des recherches de données dans au moins le stock de données précité, **caractérisé en ce que** des formulations de recherche pour la machine de recherche sont mémorisées comme éléments constitutifs de recherche qui forment des noeuds et arêtes d'un réseau sémantique et qui, pour la réalisation d'une recherche de données, sont assemblés pour former une instruction complexe de recherche qui peut être formée arbitrairement, et que les élément constitutifs de recherche formant des noeuds du réseau sémantique comprennent des demandes de recherche et les éléments constitutifs de recherche formant des arêtes du réseau sémantique comprennent des instructions opérationnelles.

10. Procédé selon la revendication 9, dans lequel - pour la rédaction automatisée de résumés de documents de texte - sont effectuées les étapes suivantes:
- conduire dans au moins le stock de données précité une recherche d'au moins un terme de recherche donné par un noeud (noeud de recherche) du réseau sémantique et trouver des documents de texte contenant le terme de recherche;
- comparer le contenu du texte de chaque document de texte trouvé avec des termes de recherche contenus dans des noeuds qui sont proches du noeud de recherche et reliés à celui-ci par une ou plusieurs arêtes dans le réseau sémantique;
- dans le cas d'une concordance du contenu de texte d'un document de texte avec au moins un terme de recherche d'un tel noeud proche, générer un fichier associé au document de texte, dans lequel sera écrite, en tant que résumé du document de texte, une désignation abrégée au moins du noeud précité contenant le ou bien les terme(s) de recherche.

11. Procédé selon la revendication 10, **caractérisé par le fait qu'**une désignation abrégée de l'arête ou bien des arêtes reliant le noeud de recherche et le noeud proche est écrite dans le fichier pour le résumé du document de texte.

12. Procédé selon la revendication 10 ou 11, **caractérisé par le fait que** l'on effectue une hiérarchisation des documents de texte en fonction de la distance des termes de recherche du noeud de recherche et du noeud proche dans le contenu de texte de chaque document de texte.

13. Procédé selon l'une des revendications 10 à 12, **caractérisé par le fait que** des noeuds proches du noeud de recherche sont des noeuds directement voisins.

14. Procédé selon l'une des revendications 10 à 13, **caractérisé par le fait que** des noeuds proches du noeud de recherche comprennent des noeuds voisins de noeuds directement voisins.

15. Procédé selon l'une des revendications 10 à 14, **caractérisé par le fait qu'**au moins deux noeuds proches peuvent être réunis pour former une section du réseau.

16. Procédé selon l'une des revendications 10 à 15, **caractérisé par le fait qu'**une combinaison de noeuds de recherche et de noeuds proches peut être choisie librement par l'utilisateur.

17. Programme d'ordinateur avec un code de programme qui est apte à mettre en oeuvre un procédé selon l'une des revendications 9 à 16 lors du déroulement sur un ordinateur.

18. Programme d'ordinateur selon la revendication 17, qui est mémorisé sur un support de données lisible par ordinateur.
